# EUROPÄISCHE PATENTSCHRIFT

(11) **EP 3 228 814 B1**
(45) Veröffentlichungstag und Bekanntmachung des Hinweises auf die Patenterteilung: **30.10.2019**
(21) Anmeldenummer: 17000571.4
(22) Anmeldetag: 05.04.2017
(51) Int. Cl.: E21B 43/10, E21B 4/14, F16L 13/14, E21B 11/02, E21B 4/06, E21B 7/20

(54) **LAFETTE EINER ERDBOHRVORRICHTUNG UND VERFAHREN ZUM KLEMMEN EINES LANGGESTRECKTEN ZYLINDERFÖRMIGEN ELEMENTS EINER ERDBOHRVORRICHTUNG AUF EINER LAFETTE**
CARRIAGE OF AN EARTH BORING DEVICE AND METHOD FOR CLAMPING AN ELONGATE CYLINDRICAL ELEMENT OF AN EARTH BORING DEVICE ON A CARRIAGE
AFFÛT D'UN DISPOSITIF DE FORAGE DU SOL ET PROCÉDÉ DE SERRAGE D'UN ÉLÉMENT ALLONGÉ CYLINDRIQUE D'UN DISPOSITIF DE FORAGE DU SOL

(30) Priorität: 07.04.2016 DE 102016003996
(43) Veröffentlichungstag der Anmeldung: 11.10.2017
(73) Patentinhaber: TRACTO-TECHNIK GmbH & Co. KG, 57368 Lennestadt (DE)
(72) Erfinder: Schumacher, Philipp, 57368 Lennestadt (DE)
(74) Vertreter: König, Gregor Sebastian

(56) Entgegenhaltungen:
- DE-A1- 2 166 177
- GB-A- 2 088 512
- GB-A- 2 140 528

## Beschreibung

Die Erfindung betrifft eine Lafette einer Erdbohrvorrichtung.

Erdbohrvorrichtungen, insbesondere Horizontalbohrvorrichtungen, kommen zum Einsatz, um in grabenloser Bauweise Erdbohrungen beispielsweise für Versorgungs- und Entsorgungsleitungen in das Erdreich einzubringen bzw. bereits verlegte Altleitungen grabenlos auszutauschen. Zum Einbringen der Erdbohrungen wird meist ein Bohrgestängeschüsse aufweisendes Bohrgestänge verwendet, bei dem die Bohrgestängeschüsse miteinander, mit Bohrköpfen und/oder einem Antrieb verbindbar sind.

Bei einer Erdbohrvorrichtung kann es sich insbesondere um eine Rammbohrvorrichtung, wie sie insbesondere für die Herstellung von horizontalen Erdbohrungen verwendet wird, handeln. Die Rammbohrvorrichtung wird in der Regel mittels eines Schlagkolbens angetrieben, der innerhalb eines Gehäuses hin- und herbewegt wird und dabei, je nach gewünschter Bewegungsrichtung der Rammbohrvorrichtung, auf eine vordere oder hintere Schlagfläche prallt. Die dadurch übertragene kinetische Energie des Schlagkolbens sorgt für eine Beschleunigung der Rammbohrvorrichtung innerhalb des Erdreichs.

Insbesondere bei derartigen Erdbohrvorrichtungen besteht das Problem darin, ein Element, welches eine zylindrische Außenform aufweist, in axialer Richtung zeitweilig schwingend zu verspannen bzw. zu klemmen.

Aus DE 21 66 177 A ist eine Verspannung bzw. ein Klemmen mittels einer Rücklaufsperre, die zwei in federbelasteten Parallellenkern gehaltene Backen aufweist, bekannt. Das Gehäuse der Rammbohrvorrichtung kann in einer Offenstellung zwischen die Backen bewegt werden. Der Aufbau der aus der DE 21 66 177 A bekannten Rücklaufsperre ist aufwendig.

Aufgabe der Erfindung ist es daher, eine Lafette einer Erdbohrvorrichtung mit einer Vorrichtung zum Klemmen eines Elements, insbesondere eines langgestreckten, eine rundliche Außenkontur aufweisenden Elements zu schaffen, die einfach aufgebaut ist.

Diese Aufgabe wird durch den Gegenstand der nebengeordneten Patentansprüche gelöst. Vorteilhafte Ausführungen sind in den abhängigen Patentansprüchen genannt.

Kerngedanke der Erfindung ist es, dass eine Druckkammer gebildet wird, die eine flexible Wandung aufweist, die mit dem Element in Anlage gebracht werden kann. Das zu klemmende Element kann von der flexiblen Wandung, insbesondere zumindest teilweise in Umfangsrichtung, umschlossen werden. Die Druckkammer kann mittels eines Druckmediums, beispielsweise Druckluft, befüllt werden. Eine derartige Vorrichtung ist einfach aufgebaut und weist neben der dehnfähigen Hülle der Druckkammer eine als Gegenlager wirkende starre Wandung auf.

Die Vorrichtung zum Klemmen eines Elements ein Radialkraftelement zur Ausbildung einer druckmediumdichten Verbindung zwischen der Hülle und dem Gegenlager aufweisen. Hierdurch kann eine besonders einfach aufgebaute Vorrichtung gebildet werden, bei der die Anzahl der zur Ausbildung der Vorrichtung benötigten Elemente sowie der Zusammenbau der verwendeten Elemente verringert ist.

Die Erfindung schafft eine Lafette einer Erdbohrvorrichtung gemäß Anspruch 1. Die dehnfähige Hülle kommt damit direkt mit dem zu klemmenden bzw. zu verspannenden Element in Kontakt. Bei der dehnfähigen Hülle kann es sich insbesondere um ein luftundurchlässiges Material handeln.

Die Vorrichtung kann ferner ein Radialkraftelement zur Ausbildung einer druckmediumdichten Verbindung zwischen der Hülle und dem Gegenlager aufweisen. Die dehnfähige Hülle weist eine Anlagefläche zum Kontaktieren des Elements auf. Mittels des Radialkraftelements kann eine Verpressung der dehnfähigen Hülle zwischen dem Radialkraftelement und der starren Wandung erreicht werden. Es wurde erkannt, dass die Ausbildung einer Druckkammer mittels eines Verpressens der dehnfähigen Hülle mit der starren Wandung erreicht werden kann. Insbesondere kann es für ein Verpressen der dehnfähigen Hülle mit der starren Wandung ausreichen, dass eine Radialkraft ausgeübt wird. Insbesondere können zwei Radialkraftelemente vorgesehen sein, die beabstandet in Längsrichtung des zu klemmenden oder zu verspannenden Elements in der Vorrichtung vorgesehen sind.

Bei dem zu klemmenden Element handelt es sich um ein langgestrecktes zylinderförmiges Element einer Erdbohrvorrichtung, insbesondere ein Gehäuse einer Erdbohrvorrichtung, insbesondere einer Rammbohrvorrichtung (Erdrakete). Das zu klemmende Element kann einen rundlichen, insbesondere ellipsenförmigen oder kreisförmigen Querschnitt quer zur Längsrichtung des zu klemmenden Elements aufweisen.

Es können mehrere Vorrichtungen zum Klemmen des zu klemmenden Elements für das Element vorgesehen sein. Beispielsweise kann eine Erdrakete mittels zweier oder mehrerer zueinander beabstandeter Vorrichtungen geklemmt werden. Die Vorrichtungen können an einer Lafette befestigt sein. Die Vorrichtungen können an der Lafette, insbesondere einem Gestell der Lafette, an Führungen verfahrbar sein bzw. bewegt werden. Insbesondere kann eine translatorische Bewegung der Vorrichtungen in Führungen bevorzugt sein, wobei die Führungen im Wesentlichen vertikal ausgerichtet sein können, um beispielsweise die Erdrakete vertikal an einer Startbaugrube auf bzw. in der Lafette verfahren zu können. Das wahlweise "klemmen" der Erdrakete und ein unabhängiges translatorisches Verfahren der Vorrichtung kann zu unterschiedlichen Neigungen der Erdrakete, insbesondere bezogen auf die Horizontale, führen.

Es kann vorgesehen sein, mittels einer gesteuerten Beaufschlagung der Druckkammer mit Druck, einen unterschiedlichen Grad des Klemmens einzustellen. Es ist mindestens ein Zwischenzustand möglich, bei dem ein Druck eingestellt wird, der kleiner ist als ein Klemmdruck, bei dem ein Kraftschluss hergestellt werden kann, obwohl die Erdrakete betrieben wird. In dem Zwischenzustand kann sich die Erdrakete im Betrieb bewegen; es wird eine Mantelreibung/Haftreibung auf die Erdrakete ausgeübt.

Die Vorrichtung kann für mehrere Größen und/oder Formen eines zu klemmenden Elements verwendet werden, da sich die dehnfähige Hülle an die Außenkontur des zu klemmenden Elements anpassen kann. Das zu klemmende Element kann unterschiedliche Formen und/oder unterschiedliche Durchmesser aufweisen.

Im Sinne der Erfindung umfasst der Begriff "klemmen" das Ausbilden eines Kraftschlusses. Insbesondere kann ein Kraftschluss zwischen der dehnfähigen Hülle und dem zu klemmenden Element ausgebildet werden. Das zu klemmende Element kann entlang seines Umfangs zumindest teilweise oder vollumfänglich von der dehnfähigen Hülle umgeben werden. Es kann eine Dichtung zwischen dem zu klemmenden Element und der dehnfähigen Hülle mittels des Klemmens erreicht werden. Ein Stoffübergang im Bereich der Klemmung entlang des zu klemmenden Elements kann verhindert werden. Die Klemmung kann eine Barriere an der Außenseite oder Innenseite des zu klemmenden Elements bilden. Die Vorrichtung kann beispielsweise in oder über ein Ende einer getrennten Ver- oder Entsorgungsleitung geschoben werden und mit dem Ende verklemmt bzw. verspannt werden.

In einer bevorzugten Ausführungsform ist die starre Wandung rohrförmig ausgestaltet, so dass ein einfach zu handhabendes und einfach herstellbares Element verwendet werden kann. Der Begriff "rohrförmig" umfasst dabei einen länglichen Hohlkörper, dessen Länge größer als sein Durchmesser sein kann. Eine rohrförmige Wandung eignet sich für ein Klemmen eines langgestreckten Elements, wobei der Querschnitt der starren Wandung derart gewählt sein kann, dass überschüssiges Material vermieden werden kann. Als Material für die starre Wandung kann Stahl, ein Nichteisenmetall, ein Kunststoff oder ein ähnliches Material verwendet werden, welches eine gewisse Festigkeit aufweist.

In einer bevorzugten Ausführungsform weist das Radialkraftelement einen ringförmigen Abschnitt auf, so dass das Radialkraftelement als Abschnitt oder Segment eines Rohres ausgestaltet sein kann. Das Radialkraftelement weist einen Durchmesser auf, der kleiner als der Durchmesser der starren Wandung in dem Bereich ist, in dem die dehnfähige Hülle zwischen der starren Wandung und dem Radialkraftelement verpresst wird. Bei dem Material des Radialkraftelements kann es sich um jeden plastisch verformbaren Werkstoff handeln. Bevorzugt kann eine handelsübliche Stahlsorte verwendet werden.

Die erfindungsgemäße Lösung hat den Vorteil, dass ein breiter Bereich von Abmessungen sowohl in der Länge als auch im Durchmesser der starren Wandung und/oder der dehnfähigen Hülle sowie des Radialkraftelements abgedeckt werden kann. Es können sehr kleine aber auch sehr große Abmessungen erzielt werden. Hinsichtlich des Radialkraftelements kann für das Aufbringen einer größeren Kraft, eine größere Breite des Radialkraftelements verwendet werden.

Erfindungsgemäß ist das Gegenlager um die Hülle angeordnet, so dass sich die dehnfähige Hülle innerhalb eines die starre Wandung ausbildenden Elements nach innen bewegt, wenn die Druckkammer mit Druckmedium beaufschlagt wird. Das zu klemmende Element befindet sich dann innerhalb der starren Wandung bzw. des Gegenlagers; die starre Wandung kann die dehnfähige Hülle entlang eines Längsabschnitts umgeben.

In einer bevorzugten Ausführungsform weist die dehnfähige Hülle eine einlagige Schicht auf. Die dehnfähige Hülle kann in diesem Falle aus einem einzigen Material bestehen. Als Material der dehnfähigen Hülle kann ein dehnfähiger, ein oder mehrlagiger Werkstoff verwendet werden. Insbesondere kann als Werkstoff ein Synthesekautschuk, vorzugsweise Nitrilkautschuk verwendet werden. Ein NBR (Nitrile Butadiene Rubber, Nitril-Butadien-Kautschuk) bietet den Vorteil einer hohen Beständigkeit gegenüber Ölen, Fetten und Kohlenwasserstoffen sowie ein günstiges Alterungsverhalten und geringen Abrieb.

In einer bevorzugten Ausführungsform weist die Vorrichtung ein Verschlusselement auf, das einen Verschluss oder Stopfen bilden kann. Im Bereich der Druckkammer oder am Rande der Druckkammer kann ein die dehnfähige Hülle oder das Gegenlager kontaktierendes Verschlusselement vorgesehen sein, das mit seinem Rand die dehnfähige Hülle oder die starre Wandung kontaktiert. Das Verschlusselement dichtet am Rand mit der dehnfähigen Hülle oder der starren Wandung ab. Mittels des Verschlusselements kann die dehnfähige Hülle in Richtung auf die starre Wandung gedrückt oder direkt auf die starre Wandung eine Kraft vom Verschlusselement ausgeübt werden. Mittels des Verschlusselements ist die Ausbildung eines Stopfens mittels der Vorrichtung zum Klemmen eines Elements realisierbar. Es kann auch vorgesehen sein, dass das Verschlusselement einen, vorzugsweise mittigen, Durchgang aufweist, durch den ein Rohr oder Schlauch durchführbar ist, um das Rohr oder den Schlauch aufzunehmen. Der Durchgang kann ein Anschlussstück aufnehmen. Hierdurch kann beispielsweise eine Fluidleitung realisiert werden, indem die Vorrichtung zum Klemmen eines Elements, das rohrförmig ausgestaltet sein kann, einen das Rohr oder den Schlauch fixierenden Anschluss aufweist. In den Anschluss oder die Vorrichtung kann von der anderen Seite ein weiteres Leitungselement oder Anschlussstück für das Fluid münden. Ein Anschlussstück in Form eines Rohres oder Schlauches, welches durch den Durchgang geführt wird, kann eingeschoben werden. Der Durchgang im Verschlusselement kann mit Dichtungsmitteln versehen sein, um eine Abdichtung des Anschlussstücks mit dem Verschlusselement zu erreichen. Es ist beispielsweise möglich, während der Ausführung von Reparaturarbeiten an einer Ver- oder Entsorgungsleitung einen Bypass zu einem anderen Ende einer durchtrennten Leitung zu bilden. Der Durchgang des Verschlusselements kann ein Innen- oder Außengewinde aufweisen, in das das Anschlussstück eingeschraubt werden kann. Neben einer lösbaren Verbindung des Anschlussstücks mit dem Verschlusselement kann das Anschlussstück auch mit dem Verschlusselement verschweißt werden oder mit diesem aus einem Stück gefertigt sein. Es ist auch möglich, dass die starre Wandung direkt als Anschlussstück ausgeführt werden kann.

In einer bevorzugten Ausführungsform weist die dehnfähige Hülle einen Mehrlagenverbund auf, so dass die dehnfähige Hülle, zumindest in einem Teilbereich aus mehreren Schichten besteht.

Der Begriff "Lafette" im Sinne der Erfindung umfasst ein Gestell, auf dem eine Erdbohrvorrichtung beim Start oder im Betrieb angeordnet sein kann. Die "Lafette" im Sinne der Erfindung kann fahrbar ausgestaltet sein.

Bei einer Erdbohrvorrichtung im Sinne der Erfindung kann es sich um jedwede Form einer Erdbohrvorrichtung, insbesondere Horizontalbohrvorrichtung, handeln, wobei eine Rammbohrvorrichtung bevorzugt ist.

Die Erfindung schafft auch ein Verfahren zum Klemmen eines langgestreckten zylinderförmigen Elements einer Erdbohrvorrichtung auf einer Lafette mit einer Druckkammer, die eine flexible Wandung und einer als Gegenlager wirkende starre Wandung aufweist. Bei dem Verfahren wird ein Druckmedium in die Druckkammer eingeleitet und ein Kraftschluss zwischen der Hülle und dem zu klemmenden Element ausgebildet.

Die vorstehenden Ausführungen stellen ebenso wie die nachfolgende Beschreibung beispielhafter Ausführungsformen keinen Verzicht auf bestimmte Ausführungsformen oder Merkmale dar.

Die Erfindung wird nachfolgend von in den Zeichnungen dargestellten Ausführungsbeispielen näher erläutert.

In den Zeichnungen zeigt:
Fig. 1 ein Ausführungsbeispiel in einer isometrischen Schnittdarstellung;
Fig. 2 ein nicht zur Erfindung gehörendes Beispiel in einer isometrischen Schnittdarstellung;
Fig. 3 ein weiteres nicht zur Erfindung gehörendes Beispiel in einer isometrischen Schnittdarstellung und
Fig. 4 ein weiteres nicht zur Erfindung gehörendes Beispiel in einer isometrischen Schnittdarstellung.

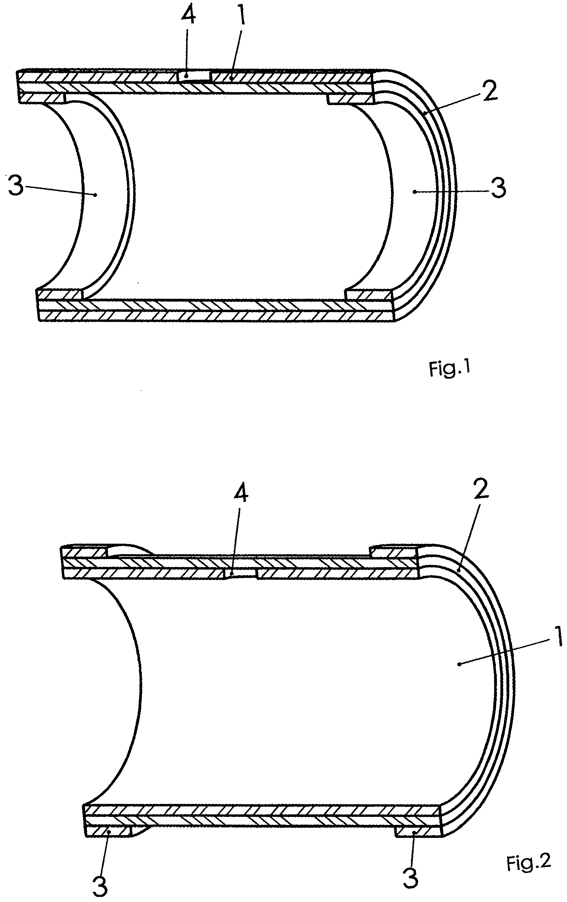

Fig. 1 zeigt eine erste Ausführungsform einer Vorrichtung zum Klemmen eines Elements, bei dem innerhalb einer starren Wandung 1, die als luftundurchlässiges Rohr ausgestaltet ist, eine dehnfähige Hülle 2, welche als flexibler, luftundurchlässiger Schlauch ausgebildet ist, angeordnet ist. Die dehnfähige Hülle 2 ist an den Stirnseiten des Rohrs mittels Radialkraftelementen 3 verpresst. Die dehnfähige Hülle 2 ist damit luftdicht zwischen der starren Wandung 1 und den Radialkraftelementen 3 verpresst, wodurch eine luftdichte Druckkammer gebildet wird. Zum Zuführen eines Druckmediums, insbesondere Druckluft, ist eine Druckluftöffnung 4 in der starren Wandung 1 ausgebildet, die mit einer (nicht dargestellten) Druckmediumquelle verbunden ist.

In dem in Fig. 1 dargestellten Ausführungsbeispiel bewirkt ein Beaufschlagen der Druckkammer mit Druckmedium eine nach innen gerichtete Dehnung der dehnfähigen Hülle 2, welches zu einem Ausdehnen der Hülle 2 in Form eines das Element klemmenden/lagernden Kissens führen kann. Die starre Wandung 1 bildet das Gegenlager der Dehnung und bleibt unverändert. Ein innerhalb der Vorrichtung befindliches (nicht dargestelltes) Element, welches sich durch die Vorrichtung erstreckt, wird geklemmt.

Fig. 2 zeigt eine Vorrichtung zum Klemmen eines Elements, bei dem außerhalb einer starren Wandung 1, die als luftundurchlässiges Rohr ausgestaltet ist, eine dehnfähige Hülle 2, welche als flexibler, luftundurchlässiger Schlauch ausgebildet ist, angeordnet ist. Die dehnfähige Hülle 2 wird an den Stirnseiten des Rohrs mittels Radialkraftelementen 3 verpresst. Die dehnfähige Hülle 2 ist damit luftdicht zwischen der starren Wandung 1 und den Radialkraftelemeriten 3 verpresst, wodurch eine luftdichte Druckkammer gebildet wird. Zum Zuführen eines Druckmediums, insbesondere Druckluft, ist eine Druckluftöffnung 4 in der starren Wandung 1 ausgebildet, die mit einer (nicht dargestellten) Druckmediumquelle verbunden ist.

In dem in Fig. 2 dargestellten Beispiel bewirkt ein Beaufschlagen der Druckkammer mit Druckmedium eine nach außen gerichtete Dehnung der dehnfähigen Hülle 2. Die starre Wandung 1 bildet das Gegenlager der Dehnung und bleibt unverändert.

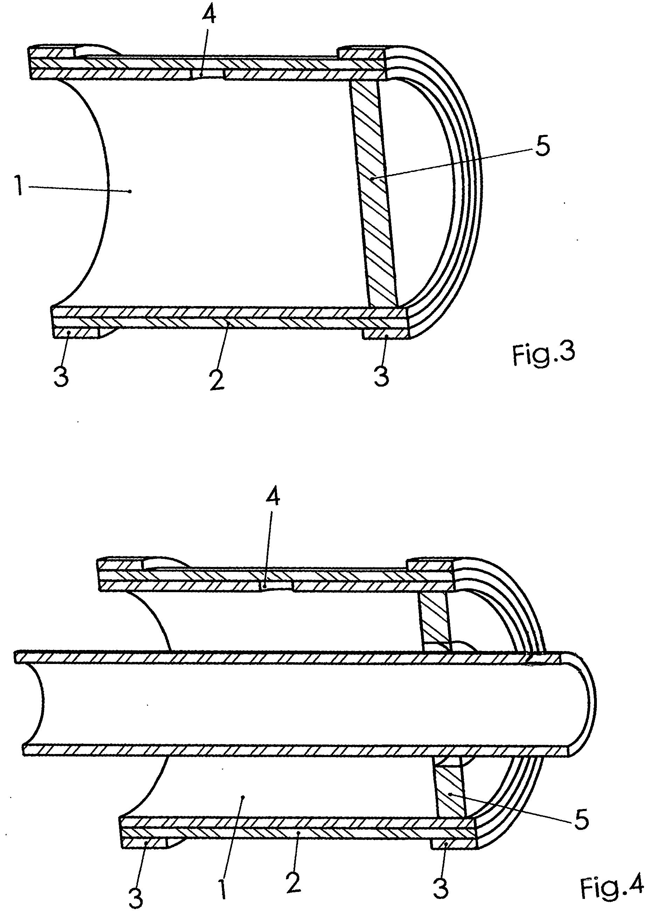

Fig. 3 zeigt eine weitere Vorrichtung zum Ausbilden einer Fluidverbindung, bei der im Bereich der Druckkammer in Anlage mit der starren Wandung 1 ein Verschlusselement 5 vorgesehen ist, das die rohrförmig ausgestaltete starre Wandung 1 kontaktiert. Die Druckkammer bzw. das Rohr wird mittels des Verschlusselements 5 verschlossen in Richtung der Längserstreckung des Rohrs. Das Verschlusselement 5 ist randseitig zur Druckkammer angeordnet. Das Verschlusselement 5 ist im Bereich eines Radialkraftelements 3 angeordnet. Verschlusselement 5, dehnfähige Hülle 2, starre Wandung 1 und Radialkraftelement 3 sind miteinander verbunden, bevorzugt verpresst. Das Verschlusselement 5 stellt eine Abdichtung in längsaxialer Erstreckung der starren Wandung 1 dar.

In Fig. 4 ist eine weitere Vorrichtung zum Klemmen eines Elements dargestellt, wobei der Unterschied zu dem in Fig. 3 dargestellten Ausführungsbeispiel darin besteht, dass das Verschlusselement 5 einen Durchgang aufweist. Der Durchgang des Verschlusselements 5 ist mittig im Verschlusselement angeordnet. Ferner zeigt die Fig. 4 ein Anschlussstück, welches mit dem Durchgang dicht verbunden ist. Vorrichtung und Anschlussstück bilden einen Abschnitt einer Fluidverbindung.

## Patentansprüche

1. Lafette einer Erdbohrvorrichtung, wobei eine Vorrichtung zum Klemmen eines langgestreckten zylinderförmigen Elements der Erdbohrvorrichtung an der Lafette befestigt ist, wobei die Vorrichtung zum Klemmen eine Druckkammer aufweist, die eine flexible Wandung mit einer dehnfähigen Hülle (2) und eine als Gegenlager wirkende starre Wandung (1) umfasst, wobei im Bereich der Druckkammer das Gegenlager um die Hülle angeordnet ist, wobei die Hülle (2) eine Anlagefläche zum Kontaktieren des langgestreckten zylinderförmigen Elements der Erdbohrvorrichtung aufweist, und wobei durch Einleiten eines Druckmediums in die Druckkammer ein Kraftschluss zwischen der Hülle (2) und dem langgestreckten zylinderförmigen Element der Erdbohrvorrichtung ausgebildet wird.

2. Lafette nach Anspruch 1, wobei die Vorrichtung ein Radialkraftelement (3) zur Ausbildung einer druckmediumdichten Verbindung zwischen der Hülle und dem Gegenlager aufweist.

3. Lafette Anspruch 2, **dadurch gekennzeichnet, dass** das Radialkraftelement (3) einen ringförmigen Abschnitt aufweist.

4. Lafette nach einem der Ansprüche 1 bis 3, **dadurch gekennzeichnet, dass** die starre Wandung (1) rohrförmig ausgestaltet ist.

5. Lafette nach einem der Ansprüche 1 bis 4, **dadurch gekennzeichnet, dass** das langgestreckte zylinderförmige Element ein Gehäuse der Erdbohrvorrichtung ist.

6. Lafette nach einem der Ansprüche 1 bis 5, **dadurch gekennzeichnet, dass** die Hülle (2) eine einlagige Schicht oder einen Mehrlagenverbund aufweist.

7. Verfahren zum Klemmen eines langgestreckten zylinderförmigen Elements einer Erdbohrvorrichtung auf einer Lafette, auf dem das langgestreckte zylinderförmige Element beim Start oder im Betrieb angeordnet ist, **dadurch gekennzeichnet, dass** die Vorrichtung zum Klemmen eine Druckkammer aufweist, die eine flexible Wandung mit einer dehnfähigen Hülle (2) und eine als Gegenlager wirkende starre Wandung (1) umfasst, wobei im Bereich der Druckkammer das Gegenlager um die Hülle angeordnet ist und die Hülle (2) eine Anlagefläche zum Kontaktieren des langgestreckten zylinderförmigen Elements der Erdbohrvorrichtung aufweist, wobei das Verfahren den Schritt aufweist, dass Druckmedium in die Druckkammer eingeleitet wird und dadurch ein Kraftschluss zwischen der Hülle (2) und dem langgestreckten zylinderförmigen Element der Erdbohrvorrichtung ausgebildet wird.

## Claims

1. Carriage for a ground boring device, wherein a device for clamping an elongate cylindrical element of the ground boring device is fastened to the carriage, wherein the device for clamping has a pressure chamber which comprises a flexible wall with an expandable sleeve (2) and a rigid wall (1) acting as an counterpiece, wherein the counterpiece is disposed around the sleeve in the area of the pressure chamber, with the sleeve (2) having a contact surface for making contact with the elongate cylindrical element of the ground boring device and with a frictional connection being formed between the sleeve (2) and the elongate cylindrical element of the ground boring device by introducing a pressure medium into the pressure chamber.

2. Carriage according to claim 1, wherein the device has a radial force element (3) for forming a pressure medium-tight connection between the sleeve and the counterpiece.

3. Carriage according to claim 2, **characterized in that** the radial force element (3) has an annular section.

4. Carriage in accordance with one of the claims 1 to 3, **characterized in that** the rigid wall (1) is tubular in form.

5. Carriage in accordance with one of the claims 1 to 4, **characterized in that** the elongate cylindrical element is a housing of the ground boring device.

6. Carriage in accordance with one of the claims 1 to 5, **characterized in that** the sleeve (2) has a single-layer coating or a multi-ply composite.

7. Method for clamping an elongate cylindrical element of a ground boring device on a carriage, on which the elongate cylindrical element is arranged on starting or in operation, **characterized in that** the device for clamping has a pressure chamber which comprises a flexible wall with an expandable sleeve (2) and a rigid wall (1) acting as an counterpiece, wherein the counterpiece is disposed around the sleeve in the area of the pressure chamber and the sleeve (2) has a contact surface for making contact with the elongate cylindrical element of the ground boring device and that pressure medium is introduced into the pressure chamber and a frictional connection is thereby formed between the sleeve (2) and the elongate cylindrical element of the ground boring device.

## Revendications

1. Affût d'un appareil de forage de sous-sol, un appareil de serrage d'un élément de forme cylindrique allongée de l'appareil de forage de sous-sol étant fixé à l'affût, l'appareil de serrage présentant une chambre de pression qui comprend une paroi souple avec une enveloppe (2) expansible et une paroi rigide (1) agissant comme un contre-appui, ledit contre-appui étant disposé autour de l'enveloppe dans la zone de la chambre de pression, l'enveloppe (2) présentant une surface d'appui pour être en contact avec l'élément de forme cylindrique allongée de l'appareil de forage de sous-sol et une adhérence se formant entre l'enveloppe (2) et l'élément de forme cylindrique allongée de l'appareil de forage de sous-sol en introduisant une substance sous pression dans la chambre de pression.

2. Affût selon la revendication 1, l'appareil présentant un élément de force radiale (3) pour former un contact étanche à la substance sous pression entre l'enveloppe et le contre-appui.

3. Affût selon la revendication 2, **caractérisé en ce que** l'élément de force radiale (3) présente une section annulaire.

4. Affût selon l'une quelconque des revendications 1 à 3, **caractérisé en ce que** la paroi rigide (1) possède une structure tubulaire.

5. Affût selon l'une quelconque des revendications 1 à 4, **caractérisé en ce que** l'élément de forme cylindrique allongée est un corps de l'appareil de forage de sous-sol.

6. Affût selon l'une quelconque des revendications 1 à 5, **caractérisé en ce que** l'enveloppe (2) présente une couche unique ou un composite multicouche.

7. Procédé pour le serrage d'un élément de forme cylindrique allongée d'un appareil de forage de sous-sol sur un affût, sur lequel élément de forme cylindrique allongée est disposé au démarrage ou en fonctionnement, **caractérisé en ce que** l'appareil de serrage présente une chambre de pression qui comprend une paroi souple avec une enveloppe (2) expansible et une paroi rigide (1) agissant comme un contre-appui, ledit contre-appui étant disposé autour de l'enveloppe dans la zone de la chambre de pression et l'enveloppe (2) présentant une surface d'appui pour être en contact avec l'élément de forme cylindrique allongée de l'appareil de forage de sous-sol, le procédé comprenant l'étape consistant à introduire une substance sous pression dans la chambre de pression puis à former une adhérence entre l'enveloppe (2) et l'élément de forme cylindrique allongée de l'appareil de forage de sous-sol.
